(19) Europäisches Patentamt
European Patent Office
Office européen des brevets

(11) **EP 3 079 901 B1**

(12) **EUROPÄISCHE PATENTSCHRIFT**

(45) Veröffentlichungstag und Bekanntmachung des Hinweises auf die Patenterteilung:
**16.09.2020 Patentblatt 2020/38**

(21) Anmeldenummer: **14795642.9**

(22) Anmeldetag: **10.11.2014**

(51) Int Cl.:
**B32B 17/10** *(2006.01)* **G02B 27/01** *(2006.01)*

(86) Internationale Anmeldenummer:
**PCT/EP2014/074115**

(87) Internationale Veröffentlichungsnummer:
**WO 2015/086233 (18.06.2015 Gazette 2015/24)**

(54) **THERMOPLASTISCHE FOLIE FÜR EINE VERBUNDGLAS-SCHEIBE MIT NICHTLINEAR-KONTINUIERLICHER KEILEINLAGE IN VERTIKALER UND HORIZONTALER RICHTUNG**

THERMOPLASTIC FILM FOR A COMPOSITE GLASS SHEET WITH A NON-LINEAR CONTINUOUS WEDGE INSERT IN VERTICAL AND HORIZONTAL DIRECTION

FEUILLE THERMOPLASTIQUE POUR VITRE EN VERRE FEUILLETÉ AVEC INSERTION DE CALE NON LINÉAIRE, CONTINU, ORIENTÉ VERTICALEMENT ET HORIZONTALEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2013 EP 13196871**

(43) Veröffentlichungstag der Anmeldung:
**19.10.2016 Patentblatt 2016/42**

(73) Patentinhaber: **SAINT-GOBAIN GLASS FRANCE**
**92400 Courbevoie (FR)**

(72) Erfinder:
• **ARNDT, Martin**
**52066 Aachen (DE)**

• **GOSSEN, Stefan**
**52072 Aachen (DE)**

(74) Vertreter: **Gebauer, Dieter Edmund**
**Splanemann**
**Patentanwälte Partnerschaft**
**Rumfordstraße 7**
**80469 München (DE)**

(56) Entgegenhaltungen:
**US-A1- 2007 148 472    US-A1- 2010 314 900**
**US-A1- 2011 189 426**

## Beschreibung

Die Erfindung betrifft eine thermoplastische Folie für eine Verbundglas-Scheibe mit abschnittsweiser nichtlinear-kontinuierlicher Keileinlage in vertikaler Richtung.

Verbundglas-Scheiben werden heute an vielen Orten, insbesondere im Fahrzeugbau, verwendet. Dabei ist der Begriff "Fahrzeug" weit gefasst und betrifft unter anderem Straßenfahrzeuge, Flugzeuge, Schiffe, landwirtschaftliche Maschinen oder auch Arbeitsgeräte. Auch in anderen Bereichen werden Verbundglas-Scheiben verwendet. Hierzu zählen beispielsweise Gebäude-Verglasungen als auch Informationsdisplays, z.B. in Museen oder als Werbedisplays. Dabei weist eine Verbundglas-Scheibe im Allgemeinen zwei Glasflächen auf, die auf eine Zwischenschicht laminiert sind. Die Glasflächen selbst können eine Krümmung aufweisen und sind in aller Regel von konstanter Dicke. Die Zwischenschicht weist in aller Regel ein thermoplastisches Material, in aller Regel Polyvinylbutyral (PVB), einer vorbestimmten Dicke, z.B. 0.76 mm, auf.

Da die Verbundglas-Scheibe im Allgemeinen in Bezug auf einen Betrachter geneigt ist, kommt es zu Doppelbildern. Diese Doppelbilder sind dadurch bedingt, dass einfallendes Licht in aller Regel nicht vollständig durch beide Glasflächen tritt, sondern dass zumindest ein Teil des Lichtes erst reflektiert wird und danach durch die zweite Glasfläche tritt. Diese Doppelbilder sind insbesondere bei Dunkelheit wahrnehmbar, insbesondere bei starken einstrahlenden Lichtquellen, wie z.B. die Scheinwerfer eines entgegenkommenden Fahrzeugs. Diese Doppelbilder sind extrem störend.

Häufig wird die Verbundglas-Scheibe auch als Head-Up-Display (HUD) zur Anzeige von Informationen verwendet. Dabei wird mittels einer Projektionseinrichtung ein Bild auf die Verbundglas-Scheibe projiziert, um dem Betrachter eine Information ins Sichtfeld einzublenden. Im Fahrzeugbereich wird die Projektionseinrichtung z.B. auf dem Armaturenbrett angeordnet, sodass das projizierte Bild auf der nächstliegenden Glasfläche der zum Betrachter geneigten Verbundglas-Scheibe in Richtung des Betrachters reflektiert wird. Wiederum tritt ein Teil des Lichtes jedoch in die Verbundglas-Scheibe ein und wird z.B. an der inneren Grenzschicht der vom Betrachter aus gesehen weiter außen liegenden Glasfläche und der Zwischenschicht reflektiert und tritt versetzt aus der Verbundglas-Scheibe aus. Auch hier tritt ein ähnlicher Effekt, der Effekt der Geisterbilder, in Bezug auf das darzustellende Bild auf. Dabei ist zu beobachten, dass eine klassische Kompensation des Geisterbildes für eine Augenposition stets zu stärkeren Geisterbildern für andere Augenpositionen führt. Auch führt eine rein klassische Kompensation von Geisterbildern unter Umständen dazu, dass eine Überkompensation für Doppelbilder in Transmission zu beobachten ist. Dies führt dazu, dass der jeweilige Betrachter irritiert wird oder im schlimmsten Fall eine Fehlinformation erhält.

Bislang wird versucht dieses Problem dadurch zu lösen, dass die Oberflächen der Glasflächen nicht mehr parallel, sondern unter einem festen Winkel angeordnet werden. Dies wird z.B. dadurch erreicht, dass die Zwischenschicht eine linear ansteigende und/oder abnehmende Dicke aufweist. Im Fahrzeugbau wird typischerweise die Dicke so variiert, dass am unteren Ende der Scheibe hin zum Motorraum die kleinste Dicke vorgesehen ist, während die Dicke hin zum Dach linear ansteigt. D.h. die Zwischenschicht weist eine Keilform auf. Es zeigt sich jedoch, dass die bisherigen Keilwinkelverläufe nur unzureichend Geisterbilder von Head-Up Displays minimieren können.

Die Patentanmeldung US 2010/0314900 A1 ; schlägt sine Scheibe mit Keileinlage bzw. Zwischenfolie mit einem sich in horizontaler und vertikaler Richtung ändernden Keilwinkel vor. Ausgehend von dieser Situation ist es eine Aufgabe der Erfindung eine Verbesserung in Bezug auf Doppelbilder als auch Geisterbilder bereitzustellen.

Die Aufgabe wird gelöst durch eine thermoplastische Folie für eine Verbundglas-Scheibe mit abschnittsweiser nichtlinear-kontinuierlicher Keileinlage in vertikaler und horizontaler Richtung, wobei die Verbundglas-Scheibe in vertikaler Richtung an einem unteren Ende aus der Sicht eines Betrachters weiter vom Betrachter entfernt ist als an einem oberen Ende, wobei die thermoplastische Folie bei einer hiermit ausgerüsteten Verbundglasscheibe zwischen zwei Glasschichten befindlich ist.

Mit Keileinlage wird eine Einlage, insbesondere eine thermoplastische Folie, mit einer nichtkonstanten Dicke bezeichnet. Diese Bezeichnung ist auf dem Fachgebiet üblich. Der Keilwinkel ist dabei der an einer Stelle gemessene Winkel zwischen den Oberflächen der Einlage. Die Keileinlage ist nichtlinear-kontinuierlich im Bezug auf die Dicke. Die Keileinlage beziehungsweise thermoplastische Folie weist einen nichtlinear-kontinuierlichen Verlauf/Änderung der Dicke auf. Eine linear-kontinuierliche Änderung würde einem herkömmlichen konstanten Keilwinkel entsprechen. Eine nichtlinear-kontinuierliche Änderung ergibt sich aus einem nicht konstanten Keilwinkelprofil, wobei der Keilwinkel ortsabhängig ist. Das Keilwinkelprofil kann dabei linear oder nicht-linear sein.

Mit "abschnittsweise" ist gemeint, dass der beschriebene Verlauf auf mindestens einen Abschnitt der Einlage zutrifft. Insbesondere kann die Einlage mehrere Abschnitte aufweisen, die sich im Verlauf des Keilwinkelprofils unterscheiden.

Die thermoplastische Folie weist zumindest einen ersten Abschnitt mit einem in vertikaler und horizontaler Richtung kontinuierlichen nicht-linearen Keilwinkelprofil auf, sodass Geisterbilder von einem Head-Up Display im Bereich des ersten Abschnitts minimiert werden, wobei die thermoplastische Folie im ersten Abschnitt als auch in weiteren Abschnitten weiterhin auch Doppelbilder in Transmission minimiert. Der Keilwinkelverlauf in vertikaler Richtung verhindert oder verringert vertikal versetzte Doppel- oder Geisterbilder. Vertikale Keilwinkelverläufe, ob linear oder nicht-linear, sind aus dem Stand der Technik bekannt. Durch den zusätzlichen Keilwinkelverlauf in horizontaler Richtung können vorteilhaft auch horizontal versetzte Doppel- oder Geisterbilder vermieden oder verringert werden. Diese treten insbesondere bei horizontal stark gebogenen Scheiben auf (sogenannte Panoramascheiben).

In einer Weiterbildung der Erfindung enthält die thermoplastische Folie zumindest einen Stoff ausgewählt aus der Gruppe aufweisend Polybutylenterephthalat (PBT), Polycarbonat (PC), Polyethylenterephthalat (PET) und Polyethylennaphthalat (PEN), Polyvinylchlorid (PVC), Polyvinylfluoride (PVF), Polyvinylbutyral (PVB), Ethylenvinylacetat (EVA), Polyacrylat (PA), Polymethylmethacrylat (PMMA), Polyurethan (PUR), und/oder Gemische und Copolymere davon.

In einer weiteren Form der Erfindung weist die thermoplastische Folie am unteren Rand eine Dicke von weniger als 1 mm, insbesondere weniger als 0.9 mm, und bevorzugt eine Dicke von mehr als 0.3 mm, insbesondere mehr als 0.6 mm, auf.

Gemäß einer Weiterbildung der Erfindung weist die thermoplastische Folie in einem Bereich außerhalb des ersten Abschnitts ein Keilwinkelprofil in vertikaler Richtung auf, das zur Vermeidung von Doppelbildern in Transmission einen konstanten oder zumindest abschnittsweise variablen Keilwinkel aufweist.

Erfindungsgemäß ist der Keilwinkel in vertikaler Richtung in der Mitte des ersten Abschnitts der thermoplastischen Folie abschnittsweise größer als der Keilwinkel in vertikaler Richtung an einer anderen horizontalen Position innerhalb des ersten Abschnitts.

Gemäß einer weiteren Ausführungsform der Erfindung variiert der Keilwinkel in vertikaler Richtung in der Mitte der thermoplastischen Folie innerhalb des ersten Abschnitts zwischen 0.8 mrad und 0.2 mrad, bevorzugt zwischen 0.75 mrad und 0.15 mrad, während der Keilwinkel in vertikaler Richtung in der Mitte der thermoplastischen Folie in etwa zwischen 0.6 mrad und 0.1 mrad, bevorzugt zwischen 0.4 mrad und 0.2 mrad variiert, wobei der Keilwinkel von einem unteren Ende zu einem oberen Ende eine Funktion des Abstandes zum unteren Ende oder zum oberen Ende ist, wobei die Funktion eine Funktion zumindest zweiten Grades ist.

In einer Ausgestaltung der Erfindung weist die thermoplastische Folie eine geräuschmindernde Wirkung auf. Dadurch kann die Transmission von Geräuschen durch eine mit der Folie versehenen Verbundscheibe vorteilhaft verringert werden, wodurch eine Störung durch Umgebungsgeräusche und Fahrgeräusche vermindert werden kann. Eine solche Wirkung kann durch eine mehrlagige, beispielsweise dreilagige thermoplastische Folie erreicht werden, wobei die innere Lage eine höhere Plastizität oder Elastizität aufweist als die sie umgebenden äußeren Lagen, beispielsweise infolge eines höheren Anteils an Weichmachern. In einer Ausgestaltung der Erfindung kann die thermoplastische Folie mindestens einen getönten Bereich aufweisen. Ein solcher getönter Bereich an der oberen Kante der Scheibe ist dem Fachmann beispielsweise als "shaded band" bekannt. Hierdurch kann eine Störung des Fahrers durch blendende Sonnenstrahlung vermindert werden.

Die thermoplastische Zwischenschicht kann in einer Ausgestaltung der Erfindung eine Sonnen- oder Wärmeschutzfunktion aufweisen. Beispielweise kann die thermoplastische Zwischenschicht eine reflektierende Beschichtung im Infrarot-Bereich oder IR-absorbierende Zusätze enthalten. Die Beschichtung oder Zusätze können auf beziehungsweise in der erfindungsgemäßen thermoplastischen Folie mit Keilwinkel angeordnet sein. Alternativ kann eine weitere thermoplastische Folie, beispielsweise eine beschichtete PET-Folie, in die thermoplastische Zwischenschicht eingebracht sein.

In einer Ausgestaltung der erfindungsgemäßen Verbundscheibe kann die erste oder die zweite Glasscheibe eine funktionelle Beschichtung aufweisen, bevorzugt auf ihrer zur thermoplastischen Folie hingewandten Oberfläche. Solche funktionelle Beschichtungen sind dem Fachmann geläufig, beispielsweise elektrisch leitfähige Beschichtungen, heizbare Beschichtungen, IR-reflektierende Beschichtungen, Beschichtungen niedriger Emissivität, Antireflexbeschichtung, farbgebende Beschichtungen.

In einer Ausgestaltung weist die erfindungsgemäße Verbundscheibe eine Heizfunktion auf. Die Heizfunktion kann die gesamte Scheibenfläche oder auch nur Teile davon betreffen. Eine solche Heizfunktion kann beispielsweise durch in die thermoplastische Zwischenschicht eingelagerte Drähte oder durch eine elektrisch leitfähige Beschichtung auf einer der Glasscheiben oder einer Folie der Zwischenschicht realisiert sein.

Weiterhin gezeigt ist eine Verbundglas-Scheibe mit einer erfindungsgemäßen thermoplastischen Folie, ein entsprechendes Herstellungsverfahren für die thermoplastische Folie beziehungsweise die Verbundglas-Scheibe, eine Head-Up-Display-Anordnung sowie die Verwendung der thermoplastischen Folie als auch der hiermit ausgestatteten Verbundglas-Scheibe.

Die erfindungsgemäße thermoplastische Folie mit veränderlicher Dicke kann eine Folie mit geräuschmindernder Wirkung sein (eine sogenannte Akustik-Folie). Solche Folien bestehen typischerweise aus mindestens drei Lagen, wobei die mittlere Lage eine höhere Plastizität oder Elastizität aufweist als die sie umgebenden äußeren Lagen, beispielsweise infolge eines höheren Anteils an Weichmachern.

Die Verbundglasscheibe kann neben der erfindungsgemäßen thermoplastischen Folie eine getönte Einlage enthalten. Solche Einlagen sind typischerweise im oberen Bereich der Verbundglasscheibe/Windschutzscheibe angeordnet und sollen die Störung oder Blendung des Fahrers durch Sonneneinstrahlung verringern. Sie werden gemeinhin als "Shaded Band" bezeichnet.

Die Verbundglasscheibe kann eine funktionelle

Beschichtung aufweisen, beispielsweise eine IR-reflektierende oder IR-absorbierende Beschichtung, eine UV-reflektierende oder UVabsorbierende Beschichtung, eine Beschichtung niedriger Emissivität, eine heizbare Beschichtung. Die funktionelle Beschichtung ist bevorzugt auf einer der zur Keileinlage hingewandten Oberflächen einer der Glasscheiben aufgebracht, wo sie vor Korrosion und Beschädigung geschützt ist.

Die Verbundglasscheibe kann auch eine Einlagefolie mit einer funktionellen Beschichtung zwischen den Glasscheiben enthalten, beispielsweise aus Polyethylenterephthalat (PET). Solche beschichteten PET-Folien, beispielsweise mit IR-reflektierenden Beschichtungen, sind kommerziell verfügbar und lassen sich daher leicht in Verbundgläser einbringen. Ausführungsformen der vorliegenden Erfindung werden in exemplarischer Weise mit Bezug auf die angehängten Zeichnungen beschrieben. Es zeigt:

Fig. 1 den prinzipiellen Zusammenhang der Entstehung von Doppelbildern in Transmission,

Fig. 2 den prinzipiellen Zusammenhang der Entstehung von Geisterbildern in Reflexion,

Fig. 3 einen exemplarischen Aufbau einer Verbundglas-Scheibe mit einer keilförmigen Zwischenlage,

Fig. 4 ein exemplarisches Keilwinkelprofil zur Kompensation von Doppelbildern in Transmission,

Fig. 5 eine exemplarische Anordnung, welche den Zusammenhang verschiedener Augpositionen in Bezug auf ein Head-Up-Display aufzeigt,

Fig. 6 exemplarisch ermittelte Keilwinkelwerte für verschiedene Eckpunkte eines HUD Bereiches, welche zu unterschiedlichen Augpositionen korrespondieren,

Fig. 7 ein exemplarisches Keilwinkelprofil zur Kompensation von Geisterbildern in Reflexion,

Fig. 8 eine beispielhafte Verteilung von Doppelbildwinkeln auf einer Verbundglas-Scheibe,

Fig. 9 eine beispielhafte Verteilung des Abstands des Geisterbilds zum gewünschten HUD-Bild auf einem HUD-Bereich einer Verbundglas-Scheibe, und

Fig. 10 eine kombinierte Ansicht eines exemplarischen Keilwinkelprofils in einem Querschnitt durch das HUD-Feld zur Kompensation von Doppelbildern in Transmission in einzelnen Abschnitten und zur Kompensation von Geisterbildern in Reflexion in einem anderen Abschnitt.

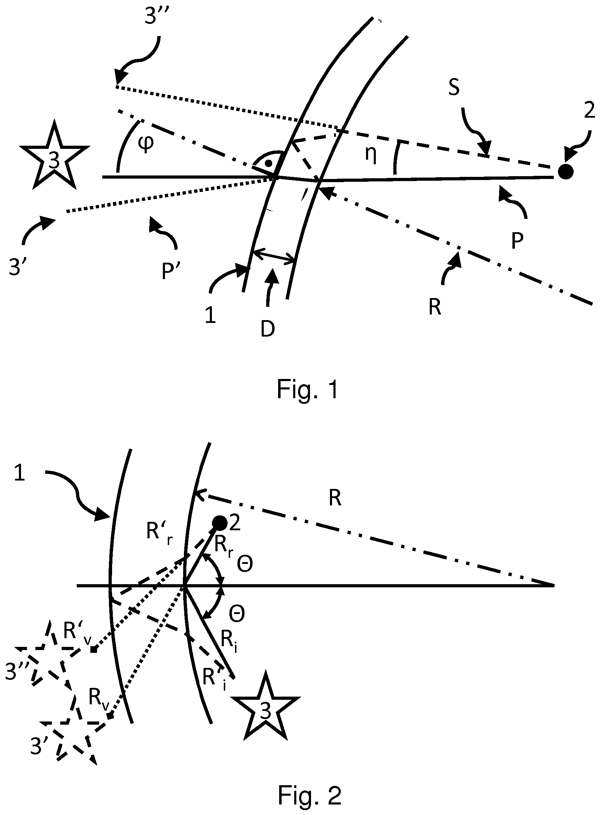

In Figur 1 ist der prinzipielle Zusammenhang der Entstehung von Doppelbildern in Transmission anhand eines Strahlenbildes dargestellt. Dabei wird eine gebogene Scheibe 1 angenommen. Die gebogene Scheibe 1 weist am Ort des Eintritts eines Strahles P in die gebogene Glas-Scheibe 1 einen Krümmungsradius R+D auf. Von einer Lichtquelle 3 wird nun Licht ausgestrahlt. Dieses Licht trifft auf die Scheibe 1 und wird gemäß der bekannten Brechungsgesetze beim Übergang von Luft zu Glas an der ersten Grenzfläche und von Glas zu Luft an der zweiten Grenzfläche gebrochen und trifft in das Auge 2 eines Betrachters. Dieser Strahl ist als durchgezogene Linie P dargestellt. Aus der Sicht des Betrachters scheint die Lichtquelle 3 am Ort 3' befindlich zu sein. Dies ist als Strahl P' dargestellt. Neben diesem als Primärstrahl bezeichneten Strahl P wird jedoch an der zweiten Grenzfläche Glas/Luft der Strahl nur teilweise in der oben beschriebenen Weise gebrochen; ein kleinerer Anteil wird an der zweiten Grenzfläche reflektiert und wird an der ersten Grenzfläche ein weiteres Mal reflektiert bevor der Strahl durch die zweite Grenzfläche tritt und in das Auge 2 des Betrachters trifft. Dieser Strahl, der sogenannte Sekundärstrahl, ist als gestrichelte Linie S dargestellt. Aus der Sicht des Betrachters scheint die Lichtquelle 3 auch am Ort 3" befindlich zu sein. Der von dem Primärstrahl P' und dem Sekundärstrahl S eingeschlossene Winkel η ist der so genannte Doppelbildwinkel.

Um diesem Doppelbild zu begegnen, ist ein Keilwinkel zwischen den zwei in Figur 1 im Wesentlichen parallel angenommen Grenzschichten vorgesehen. Nach J. P. Aclocque "Doppelbilder als störender optischer Fehler der Windschutzscheibe" in Z. Glastechn. Ber. 193 (1970) S. 193-198 lässt sich der Doppelbildwinkel in Abhängigkeit von dem Biegeradius der Glas-Scheibe und dem Einfallswinkel des Lichtstrahls nach folgender Beziehung berechnen:

$$\eta = \frac{2d}{R} \cdot \frac{\sin \varphi}{\sqrt{n^2 - \sin^2 \varphi}},$$

wobei η den Doppelbildwinkel, n den Brechungsindex des Glases, d die Dicke der Glas-Scheibe, R den Biegeradius der Glas-Scheibe am Ort des einfallenden Lichtstrahls und φ den Einfallswinkel des Lichtstrahls zur Normalen auf die Tangente zur Scheibe bezeichnen. Bei ebenen Glas-Scheiben ist der Doppelbildwinkel η gemäß

$$\eta = 2 \cdot \delta \cdot \frac{\sqrt{n^2 - \sin^2 \varphi}}{\cos \varphi}$$

abhängig von dem durch die Glasoberflächen gebildeten Keilwinkel δ.

Somit kann durch Gleichsetzung der zuvor genannten Formeln der notwendige Keilwinkel für die Eliminierung des Doppelbildes berechnet werden:

$$\delta = \frac{d}{R} \cdot \frac{\cos\varphi \cdot \sin\varphi}{n^2 - \sin^2\varphi}.$$

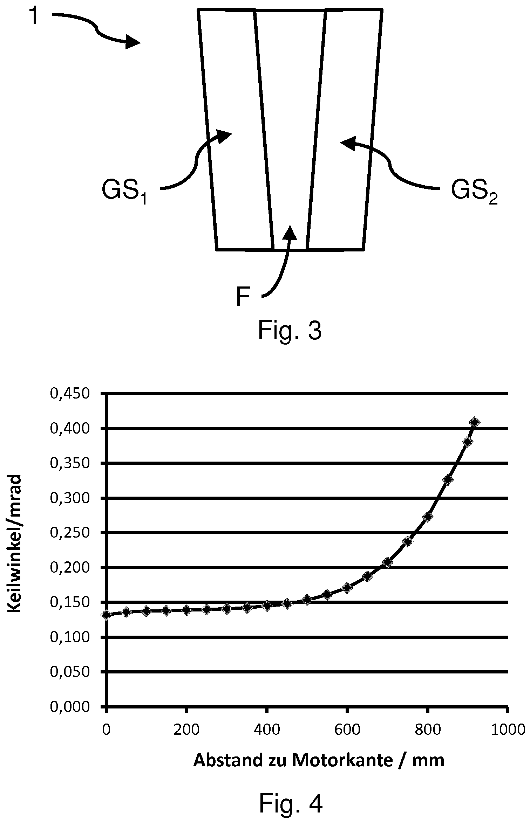

In aller Regel wird dieser Keilwinkel dadurch realisiert, dass bei Verbundglas-Scheiben 1 eine keilförmige Zwischenschicht F zwischen eine erste Glas-Schicht GS$_1$ und eine zweite Glas-Schicht GS$_2$ eingelegt wird, siehe Figur 3. Dabei kann in aller Regel vereinfachend davon ausgegangen werden, dass der Brechungsindex n konstant ist, da der Unterschied des Brechungsindex der Zwischenschicht F und der Glas-Schichten GS$_1$, GS$_2$ eher gering ist, sodass durch den geringen Unterschied kaum eine Wirkung ausgeht.

Auch bei gebogenen Windschutzscheiben kann diese Idee angewendet werden. In aller Regel werden hierzu vereinfachend der Einfallswinkel und der Biegeradius für einen Referenzaugpunkt angenommen und der damit ermittelte Keilwinkel für die gesamte Windschutzscheibe angewendet. Bei großen Verbundglas-Scheiben 1, sogenannten Panoramascheiben, und/oder stärker gebogenen Verbundglas-Scheiben 1 ist diese Herangehensweise jedoch nicht mehr ausreichend, sodass hier in aller Regel ein in vertikaler Richtung sich ändernder Keilwinkelverlauf zu bestimmen ist. Dann kann z.B. durch punktweise Berechnung entlang einer gedachten vertikalen Mittellinie einer Verbundglas-Scheibe und eventueller Interpolation ein Kompensationskeilwinkelprofil δ bestimmt werden. Für die Berechnung der Doppelbildwinkel η und der entsprechenden lokalen Kompensationskeilwinkel δ kann man die Anordnung wählen, wie sie in der Prüfvorschrift ECE R43 Annex 3 für die Bestimmung des Doppelbildwinkels empfohlen wird. Bei dieser Anordnung werden die Doppelbildwinkel ermittelt, wenn der Kopf des Fahrers sich von einer unteren Position in vertikaler Richtung bis in eine obere Endposition bewegt. Das heißt, die Blickrichtung des Fahrers bleibt immer horizontal. Alternativ oder zusätzlich kann jedoch eine Anordnung gewählt werden, bei der der Doppelbildwinkel von einer mittleren gleich bleibenden Position des Fahrers aus (Augpunkt) berechnet wird, wobei sich der Sichtwinkel des Fahrers durch die Windschutzscheibe ändert. Dabei kann das Ergebnis unterschiedlicher Bestimmungsvarianten auch gewichtet in ein Gesamtergebnis überführt werden.

Ein beispielhaftes Keilwinkelprofil, d.h. ein Verlauf der Keilwinkel in Abhängigkeit des Abstands zur Motorkante, d.h. zum unteren Ende einer Verbundglas-Scheibe 1, ist in Figur 4 angegeben. Dabei ist deutlich zu erkennen, dass ein gemäß obiger Formeln optimierter Keilwinkel δ für eine gedachte virtuelle Mittellinie bei der beispielhaften Windschutzscheibe am unteren Ende zunächst bei Werten von unter 0.15 mrad beginnt und mit zunehmendem Abstand zur Motorkante, d.h. zum oberen Ende der Verbundglas-Scheibe 1 hin, zu Werten von über 0.4 mrad ansteigt.

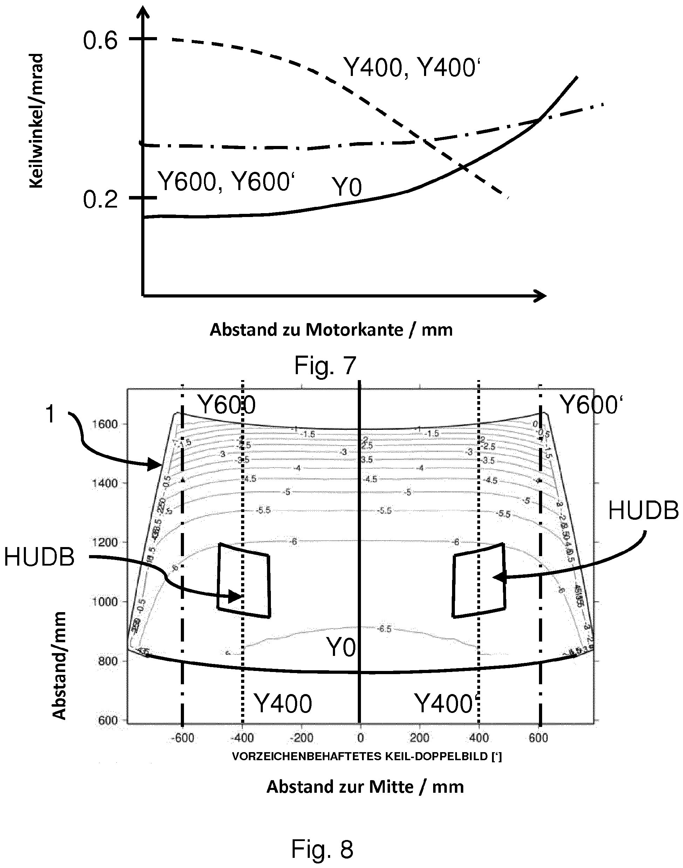

In einem beispielhaften Verfahren wird der zur Kompensation des Doppelbildes erforderliche Keilwinkel in Abhängigkeit von dem lokalen Einfallswinkel und einem lokalen Biegeradius der Verbundglas-Scheibe 1 rechnerisch ermittelt und der sich daraus ergebende Verlauf des Doppelbildwinkels η bestimmt. Beispielhaft ist ein mögliches Ergebnis des Doppelbildwinkels η in Figur 8 für eine Verbundglas-Scheibe 1 eines Fahrzeugs gezeigt. Dabei ist eine beispielhafte Verbundglas-Scheibe 1 auf ein xy Koordinatensystem abgebildet, wobei die horizontale Achse einen Abstand in Bezug auf die Mitte der Verbundglas-Scheibe 1 angibt und die vertikale Achse einen Abstand in Bezug auf eine nicht dargestellte untere Ebene angibt. Es bleibt anzumerken, dass die Darstellung der Scheibe nicht notwendigerweise ihrem tatsächlichen Einbau entspricht, sondern in der Figur so dargestellt ist, dass eine möglichst große Projektionsfläche vorhanden ist. Dabei ist der sich ergebende Doppelbildwinkel in Bogenminuten angeben.

In Bezug auf Head-Up Displays entsteht ein dem Phänomen der Doppelbilder ähnliches Problem, das als Geisterbild bezeichnet wird. In Figur 2 ist der prinzipielle Zusammenhang der Entstehung von Geisterbildern in Reflexion anhand eines Strahlenbildes dargestellt. Dabei wird eine gebogene Glas-Scheibe 1 angenommen. Die gebogene Glas-Scheibe 1 weist am Ort des Eintritts eines Strahls in die gebogene Glas-Scheibe 1 einen Krümmungsradius R auf. Von einer Lichtquelle 3, welche repräsentativ für ein Head-Up-Display HUD steht, wird nun Licht ausgestrahlt. Dieses Licht trifft entlang des Strahls R$_i$ von innen unter einem Winkel Θ auf die Glas-Scheibe 1 und wird dort unter demselben Winkel Θ reflektiert. Der reflektierte Strahl R$_r$ trifft in das Auge 2 eines Betrachters. Dieser Strahlengang ist als durchgezogene Linie dargestellt. Aus der Sicht des Betrachters scheint die Lichtquelle 3 virtuell am Ort 3', d.h. vor der Glas-Scheibe 1, befindlich zu sein. Dies ist als Strahl R$_v$ dargestellt. Neben diesem ersten Stahl trifft ein weiterer Strahl in das Auge 2 des Betrachters. Dieser Strahl R'$_i$ stammt ebenfalls von der Lichtquelle 3. Allerdings dringt dieser Strahl R'$_i$ gemäß den bekannten Brechungsgesetzen in die Glas-Scheibe 1 an der inneren Grenzfläche Luft/Glas ein und wird an der äußeren Grenzfläche Glas/Luft reflektiert, bevor der Strahl durch die innere Grenzfläche tritt und als Strahl R'$_r$ in das Auge 2 des Betrachters trifft. Die innere Grenzfläche bezeichnet die Grenzfläche, die näher zum Betrachter befindlich ist, während die äußere Grenzfläche die Grenzfläche bezeichnet, die weiter entfernt vom Betrachter ist. Dieser Strahlengang ist als gestrichelte Linie dargestellt. Aus der Sicht des Betrachters scheint die Lichtquelle 3 virtuell auch am Ort 3", d.h. ebenfalls vor der Glas-Scheibe 1, befindlich zu sein. Dies ist als Strahl R'$_v$ dargestellt.

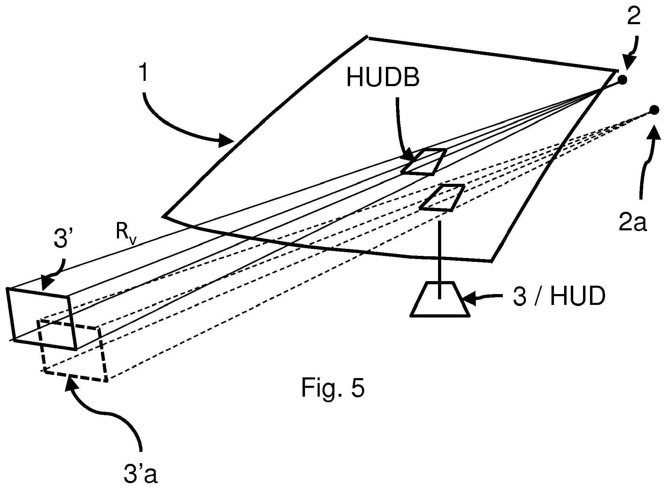

Um diesem Problem zu begegnen, kann der Keilwinkel so geändert werden, dass der an der äußeren Grenzfläche reflektierte Strahl R'$_r$ als auch der an der inneren Grenzfläche reflektierte Strahl R$_r$ in Bezug auf das Auge 2 des Betrachters sich überlagern, d.h. der an der äußeren Grenzfläche reflektierte Strahl tritt an der Stelle der Reflexion des an der inneren Grenzfläche auftreffenden Strahls aus. Wird dies nur für eine einzige Augposition durchgeführt, wie nach dem Stand der Technik üblich, so kann der hieraus ermittelte Keilwinkel jedoch zu nicht optimalen Ergebnissen führen. Dies ist unter anderem dadurch zu erklären, dass sowohl die Körpergröße von Fahrern, für die die Head-Up-Displays primär bestimmt sind, als auch die Sitzposition sehr unterschiedlich sind, sodass es eine Vielzahl möglicher Augpositionen gibt. Dies ist in Figur 5 verdeutlicht. Dort sind auf der rechten Seite der Abbildung 5 zwei mögliche Augpositionen 2 und 2a dargestellt. In Abhängigkeit von der Augposition 2 oder 2a ergibt sich die Position des Bildes 3' oder 3'a. Auch der an der Bilderzeugung beteiligte Bereich der Scheibe im Head-Up-Displaybereich HUDB ("aktiver Bereich") ist von der Augposition 2, 2a abhängig. Modellhaft können das Projektorbild 3 und das virtuelle Bild 3', 3'a als vollflächige Rechtecke aufgefasst werden. Die Verbindungslinien von der Augposition 2, 2a zu den Ecken der Rechtecke sind in der Figur 5 eingezeichnet. Die Schnittpunkte dieser Verbindungslinien mit der Scheibe ergeben die Ecken eines Trapezes, welches modellhaft den "aktiven Bereich" der Scheibe beschreiben soll. Diese Trapeze sind innerhalb des Head-Up-Displaybereichs HUDB auf der Glas-Scheibe 1 in der Figur exemplarisch dargestellt. Somit befindet sich das virtuelle Display abhängig von der Augposition an unterschiedlichen Stellen und entsprechend ergibt sich für jede dieser Augpositionen ein unter Umständen anderer Wert für einen optimierten Keilwinkel. Es soll an dieser Stelle nicht unerwähnt bleiben, dass ein Keilwinkel, der ausschließlich optimiert für Geisterbilder ist, in aller Regel zu einer Überkompensation von Doppelbildern führt, sodass die hierdurch hervorgerufenen Doppelbilder wiederum problematisch in Bezug auf die Wahrnehmung des Betrachters und/oder die Einhaltung gesetzlicher Prüfvorschriften und/oder die Einhaltung von Kundenspezifikationen in Bezug auf Doppelbilder sind.

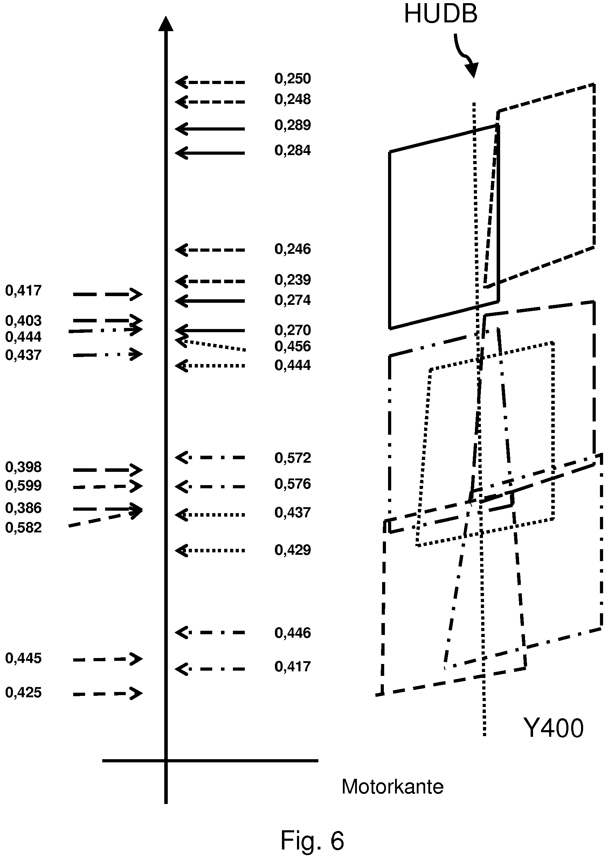

In Figur 6 werden für unterschiedliche Positionen des Auges 2 in Bezug auf die Verbundglas-Scheibe 1 die resultierenden Positionen eines HUD in Form der vorstehend beschriebenen Trapeze (als "aktive" Bereiche) innerhalb eines Head-Up-Displaybereichs HUDB wiedergegeben. Zur besseren Unterscheidung sind die Trapeze mit unterschiedlichen Linienarten ausgeführt. Zur Verdeutlichung sind für eine Anzahl von Trapezen die zugehörigen ermittelten Keilwinkel in Bezug auf die Ecken der Trapeze angegeben und auf der linken Seite relativ zum Abstand zur Motorkante eingetragen.

Beispielhaft sind in Figur 8 vertikale Schnittlinien Y400, Y400' bzw. Y600, Y600' und Y0 eingezeichnet. In Figur 7 sind für diese vertikalen Schnittlinien Y400, Y400' bzw. Y600, Y600' und Y0 in Bezug auf den Abstand des Head-Up Displaybereichs HUDB mögliche optimale Verläufe des Keilwinkelprofils aufgezeigt. Ohne weiteres ist dabei für jedes der Profile in Figur 7 erkennbar, dass dieses jeweils kontinuierlich und nichtlinear ist. Auch ist ohne weiteres ableitbar, dass das horizontale Keilwinkelprofil für einen bestimmten Abstand zur unteren Kante sich von Y400 zum Wert an Y0 gleitend verändert. Das vertikale Keilwinkelprofil der Schnitte Y0, Y600 und Y600' ist darauf optimiert, dass das Doppelbild in Transmission verringert wird. Dies ist vorteilhaft für Schnitte außerhalb des HUD-Bereichs HUDB, da dort zur Kompensation von Geisterbildern in Reflexion kein Beitrag geleistet werden muss. Die dargestellten Schnitte sind beispielhaft und sind insbesondere vom Fahrzeugmodell abhängig. Auch ist ohne weiteres ableitbar, dass das horizontale Keilwinkelprofil für einen bestimmten Abstand zur unteren Kante sich von Y400 zum Wert an Y600 gleitend verändert. Auch aus Figur 6 könnte ohne weiteres entsprechende Keilwinkelprofile für einzelne Schnittlinien ermittelt werden.

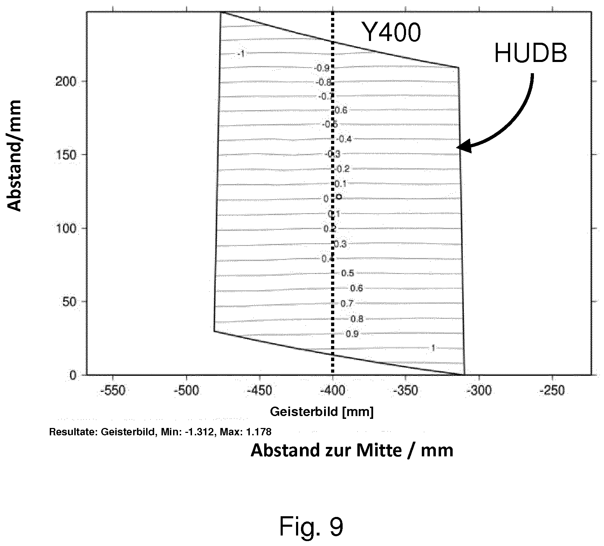

In einem beispielhaften Verfahren wird der zur Kompensation des Doppelbildes erforderliche Keilwinkel in Abhängigkeit von dem lokalen Einfallswinkel und einem lokalen Biegeradius der Verbundglas-Scheibe 1 rechnerisch ermittelt, und der sich daraus ergebende Verlauf des Keilwinkels bestimmt. Beispielhaft ist ein mögliches Ergebnis von Orten verschoben wahrgenommener Geisterbilder in Figur 9 für einen Head-Up-Displaybereich HUDB einer Verbundglas-Scheibe 1 eines Fahrzeuges gezeigt. Dieser Head-Up-Displaybereich HUDB korrespondiert zum linken Ausschnitt HUDB (und spiegelbildlich auch zum rechten Ausschnitt HUDB) in Figur 8. Der Vorteil einer solchen spiegelbildlich symmetrischen Ausgestaltung liegt darin, dass die gleiche Scheibe für Fahrzeuge in Ländern mit Rechtsverkehr wie auch für Fahrzeuge in Ländern im Linksverkehr gleichermaßen geeignet ist. Grundsätzlich kann die Scheibe aber auch asymmetrisch ausgestaltet werden, wobei der HUDB bevorzugt lediglich in der Hälfte der Scheibe angeordnet ist, welche sich in Einbaulage vor der Fahrerposition befindet. Insofern bezieht sich die horizontale Achse wiederum auf einen Abstand in Bezug auf die Mitte der Verbundglas-Scheibe 1. Die vertikale Achse ist hier jedoch auf den tiefsten Punkt des Head-Up-Displaybereichs HUDB bezogen. Dabei zeigt die Darstellung den Abstand zwischen einem Primärbild und einem Sekundärbild in mm.

Mittels einer derartigen thermoplastischen Folie F können ohne weiteres sowohl Doppelbilder in Transmission als auch Geisterbilder in Reflexion je nach Anforderung an jeder gewünschten Stelle minimiert werden. Somit lassen sich auch große Head-Up Displaybereiche HUDB realisieren.

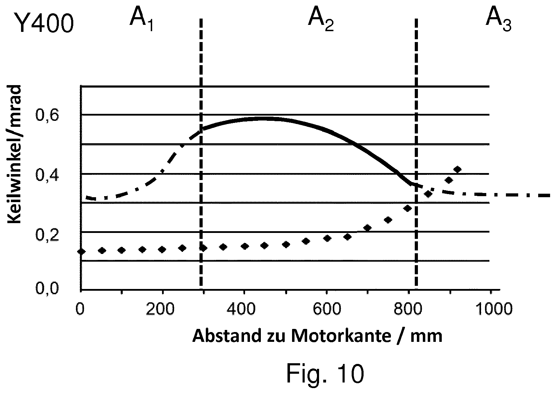

Ohne Beschränkung der Allgemeinheit kann zudem vorgesehen sein, dass die thermoplastische Folie F nicht nur innerhalb des ersten Abschnitts $A_2$ eine Optimierung im Hinblick auf Geisterbilder und eventuell auch im Hinblick auf Doppelbilder zur Verfügung stellt, sondern es kann z.B. auch vorgesehen sein, dass in einem Bereich außerhalb des ersten Abschnitts $A_2$ die thermoplastische Folie F ein Keilwinkelprofil in vertikaler Richtung aufweist, das zur Vermeidung von Doppelbildern in Transmission einen konstanten oder zumindest abschnittsweise variablen Keilwinkel aufweist. Ein beispielhaftes Keilwinkelprofil Y400 bzw. Y400' ist in Figur 10 gezeigt. Dort ist in der unteren Hälfte ein optimierter Keilwinkelverlauf für eine Optimierung von Doppelbildern in Transmission ermittelt nach obigem Formelzusammenhang für eine beispielhafte Verbundglas-Scheibe 1 mittels Rauten für bestimmte Abstände zur Motorkante gezeigt. Weiterhin ist im Abschnitt $A_2$ der für Geisterbilder optimierte Verlauf als durchgezogene Linie angezeigt. Beide Kurven können einander angenähert werden, wobei hier ein großer Freiraum zur Optimierung vorhanden ist. So kann z.B., wie in Figur 10 angedeutet, in den "Außenbereichen" $A_1$ und $A_3$ in Bezug auf den ersten Abschnitt $A_2$ als Übergangsbereich verwendet werden, wobei es im Bereich des Abschnitts $A_1$ z.B. zu einer leichten Überkompensation von Doppelbildern kommt, und wobei es im Bereich des Abschnitts $A_3$ zu einer leichten Unterkompensation kommt. Ein mögliches Keilwinkelprofil kann dabei in den strich-punktierten Linien in den Abschnitten $A_1$ und $A_3$ vorgesehen sein, die einen nahtlosen Übergang in den ersten Abschnitt $A_2$ ermöglichen. Hier können unterschiedliche Faktoren Berücksichtigung finden. So kann es z.B. wünschenswert sein, Doppelbilder stärker als Geisterbilder im ersten Abschnitt $A_2$ zu minimieren, dann wäre es möglich z.B. die als durchgezogene Linie gezeigte Kurve im Abschnitt $A_2$ näher an die Rautenkurve zu verschieben oder aber mittels geeigneter Approximationslösungen hier beide Kurven einander anzugleichen. Dabei können auch andere Parameter, wie z.B. ein maximaler Keilwinkel oder eine maximale Keilwinkeländerung Berücksichtigung finden. Solche Parameter können z.B. dadurch bedingt sein, dass eine Änderung der Dicke der Verbundglas-Scheibe 1 einen maximalen Wert nicht übersteigen darf. Ohne weiteres kann das Keilwinkelprofil in den anderen Abschnitten aber auch rein linear sein und beispielsweise einen festen Keilwinkel in vertikaler Richtung aufweisen.

Bevorzugt ist in Bezug auf den ersten Abschnitt $A_2$ wie in Figur 7 gezeigt das Keilwinkelprofil so gestaltet, dass der Keilwinkel in vertikaler Richtung in der Mitte des ersten Abschnitts $A_2$ der thermoplastischen Folie, d.h. z.B. bei Y400, größer ist als der Keilwinkel in vertikaler Richtung an einer anderen horizontalen Position, d.h. beispielsweise Y390 oder Y410, innerhalb des ersten Abschnitts $A_2$. In aller Regel trifft dies auch auf alle anderen Bereichen außerhalb des Abschnittes $A_2$ zu, d.h. außerhalb des Head-Up-Displaybereiches HUDB der Verbundglas-Scheibe 1.

In Ausführungsformen der Erfindung kann zudem vorgesehen sein, dass wie in Figur 7 gezeigt der Keilwinkel Y400 in vertikaler Richtung in der Mitte der thermoplastischen Folie F innerhalb des ersten Abschnitts zwischen 0.75 mrad und 0.15 mrad variiert, während der Keilwinkel Y0 in vertikaler Richtung in der Mitte der thermoplastischen Folie F in etwa zwischen 0.6 mrad und 0.1 mrad variiert. Dabei kann der Keilwinkel von einem unteren Ende zu einem oberen Ende als eine Funktion des Abstands zum unteren Ende oder zum oberen Ende verstanden werden, wobei die Funktion z.B. eine Funktion zumindest zweiten Grades ist.

Das Keilwinkelprofil kann bei der Erfindung besonders einfach dadurch ermittelt werden, dass zur Kompensation von Geisterbildern im ersten Abschnitt $A_2$ erforderliche vertikale Keilwinkel in Abhängigkeit von dem lokalen Einfallswinkel und einem lokalen Biegeradius der Verbundglas-Scheibe 1 rechnerisch für verschieden Augenpositionen ermittelt werden. Der sich daraus ergebende Verlauf des vertikalen Keilwinkels wird z.B. für eine bestimmte Anzahl von vertikalen Schnitten z.B. am Rand und in der Mitte bestimmt. Weiterhin wird der zur Kompensation von Geisterbildern im ersten Abschnitt erforderliche horizontale Keilwinkel in Abhängigkeit von dem lokalen Einfallswinkel und einem lokalen Biegeradius der Verbundglas-Scheibe 1 rechnerisch ermittelt, soweit dies nicht schon zuvor geschehen ist und der sich daraus ergebende Verlauf des horizontalen Keilwinkels bestimmt wird. Weiterhin wird noch der zur Kompensation des Doppelbildes erforderliche Keilwinkel in Abhängigkeit von dem lokalen Einfallswinkel und einem lokalen Biegeradius der Verbundglas-Scheibe 1 rechnerisch ermittelt, und der sich daraus ergebende Verlauf des Keilwinkels bestimmt. Dabei kann es insbesondere bei letzterem Schritt vereinfachend möglich sein diese Werte nur für ein einziges vertikales Profil z.B. Y0 zu bestimmen, da häufig die Werte für andere vertikale Profile, z.B. Profile Y400, sich nur unwesentlich von diesem unterscheiden. Hierdurch kann der Berechnungsaufwand überschaubar gehalten werden.

Eine derartige thermoplastische Folie F kann zumindest einen Stoff ausgewählt aus der Gruppe aufweisend Polybutylenterephthalat (PBT), Polycarbonat (PC), Polyethylenterephthalat (PET) und Polyethylennaphthalat (PEN), Polyvinylchlorid (PVC), Polyvinylfluoride (PVF), Polyvinylbutyral (PVB), Ethylenvinylacetat (EVA), Polyacrylat (PA), Polymethylmethacrylat (PMMA), Polyurethan (PUR), und/oder Gemische und Copolymere davon enthalten. Dabei kann die Auswahl eines geeigneten Materials für die thermoplastische Folie F z.B. von den Eigenschaften der Folie in Bezug auf den Brechungsindex als auch die erzielbare Festigkeit in Bezug auf eine gewisse Foliendicke abhängig sein. Prinzipiell ist die Erfindung nicht auf ein bestimmtes Material für eine thermoplastische Folie F eingeschränkt.

Um Doppelbilder zu minimieren, wird bei den in aller Regel unter einem Winkel eingesetzten Verbundglas-Scheiben 1 im Fahrzeugbau ein Keilwinkelprofil bevorzugt, bei dem in vertikaler Richtung der Keilwinkel am unteren Rand geringer ist als der Keilwinkel am oberen Rand, d.h. der Keilwinkel in der Nachbarschaft der Motorhaube wird geringer sein als der Keilwinkel in der Nachbarschaft der Dachkante eines typischen Fahrzeugs.

Für die Fertigung ist es besonders vorteilhaft, wenn die erfindungsgemäße thermoplastische Folie F am unteren Rand eine Dicke von weniger als 1 mm, bevorzugt weniger als 0.9 mm, und bevorzugt eine Dicke von mehr als 0.3 mm, insbesondere mehr als 0.6 mm, aufweist. Hierdurch kann die Folie in bewährter Weise bei der Herstellung von Verbundglas-Scheiben 1 verwendet werden, ohne dass es kostentreibender spezieller Vorrichtungen bedürfte. Somit kann ein Aufbau einer Verbundglas-Scheibe 1, wie in Figur 3 gezeigt, auch mit der erfindungsgemäßen thermoplastischen Folie F zwischen einer ersten Glasschicht $GS_1$ und einer zweite Glasschicht $GS_2$ erzielt werden.

Solche Verbundglas-Scheiben 1 weisen eine Dicke von 1 mm bis 8 mm, bevorzugt 3.5 bis 5.3 mm, auf und können somit ohne weiteres wie herkömmliche Verbundglas-Scheiben weiter verarbeitet werden. Dabei weisen die erste Glasschicht $GS_1$ und/oder die zweite Glasschicht $GS_2$ der Verbundglas-Scheibe 1 typischerweise eine Dicke ausgewählt aus einem Bereich von etwa 1 mm bis 3 mm, bevorzugt von 1.4 mm bis 2.6 mm auf. Hierdurch werden die geforderten Eigenschaften an einen Splitterschutz und/oder einen Schallschutz gewährleistet. Mit der thermoplastischen Folie F kann somit in bewährter Weise eine Verbundglas-Scheibe 1 hergestellt werden, indem eine erste Glas-Schicht $GS_1$ und eine zweite Glas-Schicht $GS_2$ erhalten werden, wobei die thermoplastische Folie F auf die erste Glasschicht $GS_1$ aufgelegt wird, und bei Verwendung eines Autoklaven-Prozesses auf die thermoplastische Folie die zweite Glasschicht $GS_2$ aufgelegt wird. Anschließend werden die thermoplastische Folie F mit der ersten Glas-Schicht $GS_1$ und der zweiten Glas-Schicht $GS_2$ im Autoklaven und unter Wärme- und Druckeinwirkung verbunden.

Die erfindungsgemäße thermoplastische Folie F ist nicht nur in einem Autoklaven-Prozess verwendbar, sondern kann z.B. auch mit einem Vakuum-Thermo-Offen-Prozess oder dergleichen autoklavenfreien Prozessen verwendet werden. Auch ist es prinzipiell möglich zunächst nur eine erste Glas-Schicht $GS_1$ mit der thermoplastischen Folie F nach Auflage zu verbinden und anschließend die zweite Glas-Schicht $GS_2$ aufzulegen und mit der auf der Glas-Schicht $GS_1$ vorverbundenen thermoplastischen Folie F zu verbinden.

Derartig hergestellte thermoplastische Folien F können in Verbundglas-Scheiben 1 in Fahrzeugen, insbesondere als Windschutzscheibe zur Anzeige eines Head-Up-Displays, oder Gebäuden oder als Informationsdisplay verwendet werden. Eine Verwendung in einer Head-Up-Display-Anordnung ist beispielsweise in Figur 5 zu erkennen. Dort beleuchtet ein Projektor als Lichtquelle einen beispielhaften Head-Up-Displaybereich HUDB einer Verbundglas-Scheibe 1, welche mit einer erfindungsgemäßen thermoplastischen Folie F ausgestattet ist. Dabei werden im Head-Up-Displaybereich HUDB Geisterbilder des Projektors minimiert, während die gesamte Verbundglas-Scheibe 1 zudem Doppelbilder in Transmission (nicht dargestellt) vermindert.

Im Ergebnis erlaubt die Erfindung eine Verbesserung in Bezug auf die Minimierung von Geisterbildern von Head-Up Displays für eine Vielzahl von Augenpositionen, ohne wesentlich mehr Geisterbilder außerhalb des Head-Up-Displaybereiches HUDB zu erzeugen. Weiterhin kann mittels der Erfindung erreicht werden, dass im Head-Up-Displaybereich HUDB als auch in den anderen Bereichen Doppelbilder in Transmission reduziert werden. Zudem lassen sich größere Head-Up-Displaybereiche HUDB als auch komplexere Windschutzscheibendesigns mit der vorgestellten Erfindung realisieren.

Obwohl in den Figuren im Allgemeinen nur ein Head-Up-Displaybereich HUDB gezeigt ist, ist die Erfindung nicht darauf beschränkt. Z.B. können mehrere Head-Up-Displaybereiche HUDB z.B. für Rechts- und Linkslenker oder aber für unterschiedliche Zwecke, wie z.B. Infotainment-System und Fahrassistenzsysteme vorgesehen sein. Dabei kann auch vorgesehen sein, dass z.B. bei Head-Up-Displaybereichen HUDB, die im Wesentlichen dem Infotainment dienen, lediglich eine Minimierung der Geisterbilder vorgesehen ist, während bei Fahrassistenzsystemen sowohl eine Minimierung der Geisterbilder als auch eine Minimierung der Doppelbilder angestrebt wird.

Im Ergebnis erlaubt die Erfindung eine Verbesserung in Bezug auf die Minimierung von Geisterbildern von Head-Up Displays für eine Vielzahl von Augenpositionen, ohne wesentlich mehr Geisterbilder außerhalb des Head-Up-Displaybereiches HUDB zu erzeugen. Weiterhin kann mittels der Erfindung erreicht werden, dass im Head-Up-Displaybereich HUDB als auch in den anderen Bereichen Doppelbilder in Transmission reduziert werden. Zudem lassen sich größere Head-Up-Displaybereiche HUDB als auch komplexere Windschutzscheibendesigns mit der vorgestellten Erfindung realisieren.

**Patentansprüche**

1. Thermoplastische Folie (F) für eine Verbundglas-Scheibe (1) mit Keileinlage, welche zumindest einen ersten Abschnitt ($A_2$) mit einer in vertikaler und horizontaler Richtung kontinuierlichen nicht-linearen Änderung der Dicke aufweist, sodass Geisterbilder von einem Head-Up Display im Bereich des ersten Abschnitts ($A_2$) minimiert werden, wobei ein Keilwinkel ($\delta$) in vertikaler Richtung in der Mitte des ersten Abschnitts ($A_2$) der thermoplastischen Folie (F) abschnittsweise größer ist als der Keilwinkel ($\delta$) in vertikaler Richtung an einer anderen horizontalen Position innerhalb des ersten Abschnitts ($A_2$), und wobei die thermoplastische Folie (F) im ersten Abschnitt ($A_2$) als auch in weiteren Abschnitten Doppelbilder in Transmission minimiert.

2. Thermoplastische Folie (F) nach Anspruch 1, **dadurch gekennzeichnet, dass** die thermoplastische Folie (F) zumindest einen Stoff ausgewählt aus der Gruppe aufweisend Polybutylenterephthalat (PBT), Polycarbonat (PC), Polyethylenterephthalat (PET) und Polyethylennaphthalat (PEN), Polyvinylchlorid (PVC), Polyvinylfluoride (PVF), Polyvinylbutyral (PVB), Ethylenvinylacetat (EVA), Polyacrylat (PA), Polymethylmethacrylat (PMMA), Polyurethan (PUR), und/oder Gemische und Copolymere davon enthält.

3. Thermoplastische Folie (F) nach einem der vorhergehenden Ansprüche, **dadurch gekennzeichnet, dass** der Keilwinkel am unteren Rand geringer ist als am oberen Rand der Verbundglas-Scheibe (1).

4. Thermoplastische Folie (F) nach einem der vorhergehenden Ansprüche, **dadurch gekennzeichnet, dass** die thermoplastische Folie (F) am unteren Rand eine Dicke von weniger als 1 mm, insbesondere weniger als 0.9 mm, und bevorzugt eine Dicke von mehr als 0.3 mm, insbesondere mehr als 0.6 mm, aufweist.

5. Thermoplastische Folie (F) nach einem der vorhergehenden Ansprüche, **dadurch gekennzeichnet, dass** in einem Bereich außerhalb des ersten Abschnitts ($A_2$) die thermoplastische Folie (F) ein Keilwinkelprofil in vertikaler Richtung aufweist, das zur Vermeidung von Doppelbildern in Transmission einen konstanten oder zumindest abschnittsweise variablen Keilwinkel aufweist.

6. Thermoplastische Folie (F) nach einem der vorhergehenden Abschnitte, **dadurch gekennzeichnet, dass** der Keilwinkel in vertikaler Richtung in der Mitte der thermoplastischen Folie (F) innerhalb des ersten Abschnitts zwischen 0.8 mrad und 0.1 mrad, bevorzugt zwischen 0.75 mrad und 0.15 mrad, variiert, während der Keilwinkel in vertikaler Richtung in der Mitte der thermoplastischen Folie (F) in etwa zwischen 0.6 mrad und 0.1 mrad, bevorzugt zwischen 0.4 mrad und 0.15 mrad variiert, wobei der Keilwinkel von einem unteren Ende zu einem oberen Ende eine Funktion des Abstandes zum unteren Ende oder zum oberen Ende ist, wobei die Funktion eine Funktion zumindest zweiten Grades ist.

7. Verbundglas-Scheibe (1), aufweisend

   - eine erste Glasschicht ($GS_1$) und eine zweite Glas-Schicht ($GS_2$),
   - eine thermoplastische Folie (F) nach einem der vorhergehenden Ansprüche,
   - wobei sich die thermoplastische Folie (F) zwischen der ersten Glas-Schicht ($GS_1$) und der zweiten Glas-Schicht ($GS_2$) befindet.

8. Verbundglas-Scheibe (1) nach Anspruch 7, wobei die Verbundglas-Scheibe (1) eine Dicke von 1 mm bis 8 mm, bevorzugt 3.5 bis 5.3 mm, am unteren Ende aufweist.

9. Verbundglas-Scheibe (1) nach Anspruch 7 oder 8, wobei die erste Glas-Schicht ($GS_1$) und/oder die zweite Glas-Schicht ($GS_2$) eine Dicke ausgewählt aus einem Bereich von etwa 1 mm bis 3 mm, bevorzugt 1.4 bis 2.6 mm am unteren Ende aufweist.

10. Verfahren zur Herstellung einer thermoplastischen Folie (F) nach einem der Ansprüche 1 bis 6, **dadurch gekennzeichnet, dass** der zur Kompensation von Geisterbildern im ersten Abschnitt ($A_2$) erforderliche vertikale Keilwinkel in Abhängigkeit von dem lokalen Einfallswinkel und einem lokalen Biegeradius der Verbundglas-Scheibe (1) rechnerisch ermittelt, und der sich daraus ergebende Verlauf des vertikalen Keilwinkels bestimmt wird und, dass der zur Kompensation von Geisterbildern im ersten Abschnitt erforderliche horizontale Keilwinkel in Abhängigkeit von dem lokalen Einfallswinkel und einem lokalen Biegeradius der Verbundglas-Scheibe (1) rechnerisch ermittelt, und der sich daraus ergebende Verlauf des horizontalen Keilwinkels bestimmt wird, wobei weiterhin der zur Kompensation des Doppelbildes erforderliche Keilwinkel in Abhängigkeit von dem lokalen Einfallswinkel und einem lokalen Biegeradius der Verbundglas-Scheibe rechnerisch ermittelt, und der sich daraus ergebende Verlauf des Keilwinkels bestimmt wird.

11. Verfahren zur Herstellung einer Verbundglas-Scheibe (1) nach einem der Ansprüche 7 bis 9, aufweisend die Schritte

   - Erhalten der ersten Glas-Schicht ($GS_1$) und der zweiten Glas-Schicht ($GS_2$),
   - Auflegen der thermoplastischen Folie (F) auf die erste Glas-Schicht ($GS_1$),
   - Auflegen der zweiten Glas-Schicht ($GS_2$) auf die thermoplastische Folie (F),
   - Verbinden der ersten Glas-Schicht ($GS_1$) mit der thermoplastischen Folie (F), und
   - Verbinden der zweiten Glas-Schicht ($GS_2$) mit der thermoplastischen Folie (F).

12. Verfahren zur Herstellung einer Verbundglas-Scheibe (1) gemäß Anspruch 11, **dadurch gekennzeichnet, dass** der Keilwinkel gemäß Anspruch 10 bestimmt wird.

13. Head-Up-Display-Anordnung, aufweisend einen Projektor (3) zur Beleuchtung eines Head-Up-Displaybereiches einer Verbundglas-Scheibe (1) und eine Verbundglas-Scheibe (1) ausgestattet mit einer thermoplastischen Folie (F) gemäß einem der Ansprüche 1 bis 6, wobei der Projektor (3) im Betrieb im Wesentlichen den zweiten Abschnitt beleuchtet.

14. Verwendung einer thermoplastischen Folie (F) nach einem der vorhergehenden Ansprüche 1 bis 6 für Verbundglas-Scheiben (1) in Fahrzeugen oder Gebäuden oder als Informationsdisplay.

15. Verwendung einer Verbundglas-Scheibe (1) nach einem der Ansprüche 7 bis 9 in Fahrzeugen, insbesondere als Windschutzscheibe zur Anzeige eines Head-Up-Displays, oder Gebäuden oder als Informationsdisplay.

**Claims**

1. Thermoplastic film (F) for a laminated glass pane (1) with wedge insert, which has at least a first section ($A_2$) with, in the vertical and horizontal direction, a continuous nonlinear change of the thickness such that ghost images from a head-up display are minimized in the region of the first section ($A_2$), wherein a wedge angle ($\delta$) in the vertical direction in the center of the first section ($A_2$) of the thermoplastic film (F) is greater in some sections than the wedge angle ($\delta$) in the vertical direction at a different horizontal position inside the first section ($A_2$), and wherein the thermoplastic film (F) minimizes double images in transmission in the first section ($A_2$) and also in other sections.

2. Thermoplastic film (F) according to claim 1, **characterized in that** the thermoplastic film (F) contains at least one material selected from the group comprising polybutylene terephthalate (PBT), polycarbonate (PC), polyethylene terephthalate (PET) and polyethylene naphthalate (PEN), polyvinyl chloride (PVC), polyvinyl fluorides (PVF), polyvinyl butyral (PVB), ethylene vinyl acetate (EVA), polyacrylate (PA), polymethyl methacrylate (PMMA), polyurethane (PUR), and/or mixtures and copolymers thereof.

3. Thermoplastic film (F) according to one of the preceding claims, **characterized in that** the wedge angle at the lower edge is smaller than at the upper edge of the laminated glass pane (1).

4. Thermoplastic film (F) according to one of the preceding claims, **characterized in that** the thermoplastic film (F) has, at the lower edge, a thickness of less than 1 mm, in particular less than 0.9 mm, and preferably a thickness of more than 0.3 mm, in particular more than 0.6 mm.

5. Thermoplastic film (F) according to one of the preceding claims, **characterized in that** in a region outside the first section ($A_2$) the thermoplastic film (F) has, in the vertical direction, a wedge-angle profile that has, for prevention of double images in transmission, a wedge angle that is constant or variable at least in some sections.

6. Thermoplastic film (F) according to one of the preceding claims, **characterized in that** the wedge angle in the vertical direction in the center of the thermoplastic film (F) inside the first section varies between 0.8 mrad and 0.1 mrad, preferably between 0.75 mrad and 0.15 mrad, whereas the wedge angle in the vertical direction in the center of the thermoplastic film (F) varies somewhere between 0.6 mrad and 0.1 mrad, preferably between 0.4 mrad and 0.15 mrad, wherein the wedge angle from a lower end to an upper end is a function of the distance from the lower end or from the upper end, wherein the function is at least a second degree function.

7. Laminated glass pane (1), comprising

   - a first glass layer ($GS_1$) and a second glass layer ($GS_2$),
   - a thermoplastic film (F) according to one of the preceding claims,
   - wherein the thermoplastic film (F) is situated between the first glass layer ($GS_1$) and the second glass layer ($GS_2$).

8. Laminated glass pane (1) according to claim 7, wherein the laminated glass pane (1) has a thickness of 1 mm to 8 mm, preferably 3.5 to 5.3 mm, at the lower end.

9. Laminated glass pane (1) according to claim 7 or 8, wherein the first glass layer ($GS_1$) and/or the second glass layer ($GS_2$) has a thickness selected from a range of roughly 1 mm to 3 mm, preferably 1.4 to 2.6 mm at the lower end.

10. Method for producing a thermoplastic film (F) according to one of claims 1 through 6, **characterized in that** the vertical wedge angle required for compensation of ghost images in the first section ($A_2$) is calculated as a function of the local angle of incidence and a local radius of curvature of the laminated glass pane (1), and the resultant progression of the vertical wedge angle is determined, and that the horizontal wedge angle required for compensation of ghost images in the first section is calculated as a function of the local angle of incidence and a local radius of curvature of the laminated glass pane (1), and the resultant progression of the horizontal wedge angle is determined, wherein the wedge angle required for compensation of the double image is calculated as a function of the local angle of incidence and a local radius of curvature of the laminated glass pane, and the resultant progression of the wedge angle is determined.

11. Method for producing einer laminated glass pane (1) according to one of claims 7 through 9, comprising the steps

- obtaining the first glass layer (GS$_1$) and the second glass layer (GS$_2$),
- placing the thermoplastic film (F) on the first glass layer (GS$_1$),
- placing the second glass layer (GS$_2$) on the thermoplastic film (F),
- bonding the first glass layer (GS$_1$) to the thermoplastic film (F), and
- bonding the second glass layer (GS$_2$) to the thermoplastic film (F).

12. Method for producing a laminated glass pane (1) according to claim 11, **characterized in that** the wedge angle is determined in accordance with claim 10.

13. Head up display arrangement, comprising a projector (3) for illuminating a head-up display region of a laminated glass pane (1) and a laminated glass pane (1) equipped with a thermoplastic film (F) according to one of claims 1 through 6, wherein, during operation, the projector (3) substantially illuminates the second section.

14. Use of a thermoplastic film (F) according to one of the preceding claims 1 through 6 for laminated glass panes (1) in motor vehicles or buildings or as an information display.

15. Use of a laminated glass pane (1) according to one of claims 7 through 9 in motor vehicles, in particular as a windshield for displaying a head-up display, or buildings as an information display.


**Revendications**

1. Film thermoplastique (F) pour une vitre en verre feuilleté (1) avec insert cunéiforme, qui présente au moins une première section (A$_2$) avec, dans la direction verticale et horizontale, une modification non linéaire continue de l'épaisseur telle que les images fantômes d'un affichage tête haute sont minimisées dans la zone de la première section (A$_2$), dans lequel un angle de coin ($\delta$) dans la direction verticale au centre de la première section (A$_2$) du film thermoplastique (F) est plus grand dans certaines sections que l'angle de coin ($\delta$) dans la direction verticale à une position horizontale différente à l'intérieur de la première section (A$_2$), et dans lequel le film thermoplastique (F) minimise les doubles images en transmission dans la première section (A$_2$) et également dans d'autres sections.

2. Film thermoplastique (F) selon la revendication 1, **caractérisé en ce que** le film thermoplastique (F) contient au moins un matériau choisi dans le groupe comprenant le polybutylène téréphtalate (PBT), le polycarbonate (PC), le polyéthylène téréphtalate (PET) et le polyéthylène naphtalate (PEN), chlorure de polyvinyle (PVC), fluorures de polyvinyle (PVF), butyral de polyvinyle (PVB), éthylène-acétate de vinyle (EVA), polyacrylate (PA), polyméthacrylate de méthyle (PMMA), polyuréthane (PUR), et/ou leurs mélanges et copolymères.

3. Film thermoplastique (F) selon l'une des revendications précédentes, **caractérisé en ce que** l'angle de coin au bord inférieur est plus petit qu'au bord supérieur de la vitre en verre feuilleté (1).

4. Film thermoplastique (F) selon l'une des revendications précédentes, **caractérisé en ce que** le film thermoplastique (F) a, au bord inférieur, une épaisseur inférieure à 1 mm, en particulier inférieure à 0,9 mm, et de préférence une épaisseur supérieure à 0,3 mm, en particulier supérieure à 0,6 mm.

5. Feuille thermoplastique (F) selon l'une des revendications précédentes, **caractérisée en ce que** la feuille thermoplastique (F) présente, dans une zone située à l'extérieur de la première section (A$_2$), dans le sens vertical, un profil d'angle de coin qui présente, pour éviter les doubles images en transmission, un angle de coin qui est constant ou variable au moins dans certaines sections.

6. Film thermoplastique (F) selon l'une des revendications précédentes, **caractérisé en ce que** l'angle de coin dans la direction verticale au centre du film thermoplastique (F) à l'intérieur de la première section varie entre 0,8 mrad et 0,1 mrad, de préférence entre 0,75 mrad et 0. 15 mrad, tandis que l'angle de coin dans la direction verticale au centre du film thermoplastique (F) varie quelque part entre 0,6 mrad et 0,1 mrad, de préférence entre 0,4 mrad et 0,15 mrad, dans lequel l'angle de coin d'une extrémité inférieure à une extrémité supérieure est une fonction de la distance de l'extrémité inférieure ou de l'extrémité supérieure, dans lequel la fonction est au moins une fonction du second degré.

7. Vitre en verre feuilleté (1), comprenant

- une première couche de verre (GS1) et une deuxième couche de verre (GS2),
- un film thermoplastique (F) selon l'une des revendications précédentes,
- dans laquelle le film thermoplastique (F) est situé entre la première couche de verre (GS1) et la deuxième couche de verre (GS2).

8. Vitre en verre feuilleté (1) selon la revendication 7, dans laquelle la vitre en verre feuilleté (1) a une épaisseur de 1 mm à 8 mm, de préférence de 3,5 à 5,3 mm, à l'extrémité inférieure.

**9.** Vitre en verre feuilleté (1) selon la revendication 7 ou 8, dans laquelle la première couche de verre (GS1) et/ou la deuxième couche de verre (GS2) a une épaisseur choisie dans une plage d'environ 1 mm à 3 mm, de préférence de 1,4 à 2,6 mm à l'extrémité inférieure.

**10.** Procédé de fabrication d'un film thermoplastique (F) selon l'une des revendications 1 à 6, **caractérisé en ce que** l'angle de coin vertical nécessaire à la compensation des images fantômes dans la première section ($A_2$) est calculé en fonction de l'angle d'incidence local et d'un rayon de courbure local de la vitre en verre feuilleté (1), et la progression résultante de l'angle de coin vertical est déterminée, et que l'angle de coin horizontal nécessaire pour la compensation des images fantômes dans la première section est calculé en fonction de l'angle d'incidence local et d'un rayon de courbure local de la vitre en verre feuilleté (1), et la progression résultante de l'angle de coin horizontal est déterminée, dans lequel l'angle de coin nécessaire pour la compensation de l'image double est calculé en fonction de l'angle d'incidence local et d'un rayon de courbure local de la vitre en verre feuilleté, et la progression résultante de l'angle de coin est déterminée.

**11.** Procédé de fabrication d'une vitre en verre feuilleté (1) selon l'une des revendications 7 à 9, comprenant les étapes suivantes

- l'obtention de la première couche de verre (GS1) et de la deuxième couche de verre (GS2),
- plaçant le film thermoplastique (F) sur la première couche de verre (GS1),
- plaçant la deuxième couche de verre (GS2) sur le film thermoplastique (F),
- connecter la première couche de verre (GS1) au film thermoplastique (F), et
- connecter la deuxième couche de verre (GS2) au film thermoplastique (F).

**12.** Procédé de fabrication d'une vitre en verre feuilleté (1) selon la revendication 11, **caractérisé en ce que** l'angle de calage est déterminé selon la revendication 10.

**13.** Dispositif d'affichage tête haute, comprenant un projecteur (3) pour éclairer une zone d'affichage tête haute d'une vitre en verre feuilleté (1) et une vitre en verre feuilleté (1) équipée d'un film thermoplastique (F) selon l'une des revendications 1 à 6, dans lequel, en fonctionnement, le projecteur (3) éclaire sensiblement la deuxième partie.

**14.** Utilisation d'un film thermoplastique (F) selon l'une des revendications précédentes 1 à 6 pour des vitres en verre feuilleté (1) dans des véhicules automobiles ou des bâtiments ou comme affichage d'informations.

**15.** Utilisation d'une vitre en verre feuilleté (1) selon l'une des revendications 7 à 9 dans des véhicules automobiles, en particulier comme pare-brise pour l'affichage d'un affichage tête haute, ou dans des bâtiments comme affichage d'informations.

Fig. 1

Fig. 2

1

GS$_1$

GS$_2$

F

Fig. 3

Fig. 4

Fig. 5

HUDB

| | |
|---|---|
| | 0,250 |
| | 0,248 |
| | 0,289 |
| | 0,284 |
| | 0,246 |
| | 0,239 |
| 0,417 | 0,274 |
| 0,403 | 0,270 |
| 0,444 | 0,456 |
| 0,437 | 0,444 |
| 0,398 | 0,572 |
| 0,599 | 0,576 |
| 0,386 | 0,437 |
| 0,582 | 0,429 |
| | 0,446 |
| 0,445 | 0,417 |
| 0,425 | |

Y400

Motorkante

Fig. 6

Fig. 7

Fig. 8

Resultate: Geisterbild, Min: -1.312, Max: 1.178

**Abstand zur Mitte / mm**

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100314900 A1

**In der Beschreibung aufgeführte Nicht-Patentliteratur**

- **J. P. ACLOCQUE.** Doppelbilder als störender optischer Fehler der Windschutzscheibe. *Z. Glastechn. Ber.,* 1970, vol. 193, 193-198